# EUROPÄISCHE PATENTSCHRIFT

(11) **EP 1 167 916 B1**
(45) Veröffentlichungstag und Bekanntmachung des Hinweises auf die Patenterteilung: **15.10.2008**
(21) Anmeldenummer: 01114308.8
(22) Anmeldetag: 13.06.2001
(51) Int. Cl.: G01B 3/56

(54) **Gehäuse für Winkelmesseinrichtung**
Housing for angle measuring device
Boitier pour appareil de mesure d'angle

(30) Priorität: 27.06.2000 DE 10031302
(43) Veröffentlichungstag der Anmeldung: 02.01.2002
(73) Patentinhaber: Dr. Johannes Heidenhain GmbH, 83292 Traunreut (DE)
(72) Erfinder: Thaler, Josef, 83301 Traunreut (DE); Meyer, Hermann, 83458 Schneizlreuth (DE)

(56) Entgegenhaltungen:
- EP-A- 0 776 065
- WO-A-99/54683
- DE-A- 3 441 429
- DE-A- 4 304 032
- DE-A- 19 913 262
- DE-U- 29 718 245
- US-A- 4 653 190
- PATENT ABSTRACTS OF JAPAN vol. 2000, no. 06, 22. September 2000 (2000-09-22) & JP 2000 074614 A (TOYOTA MOTOR CORP), 14. März 2000 (2000-03-14)
- PATENT ABSTRACTS OF JAPAN vol. 2000, no. 13, 5. Februar 2001 (2001-02-05) & JP 2000 292118 A (ALPS ELECTRIC CO LTD), 20. Oktober 2000 (2000-10-20)

## Beschreibung

Die Erfindung betrifft eine Winkelmesseinrichtung nach dem Oberbegriff des Patentanspruchs 1.

Winkelmesseinrichtungen dienen zur Messung von Drehbewegungen eines drehbar gelagerten Körpers, insbesondere einer Welle, über eine oder mehrere Umdrehungen. Die Drehbewegung wird dabei inkremental oder absolut erfasst. In Verbindung mit Zahnstangen und Zahnrädern oder mit Gewindespindeln lassen sich mit einer Winkelmesseinrichtung auch lineare Bewegungen messen.

Über Anschlusskabel werden der Winkelmesseinrichtung eine Betriebsspannung zugeführt und die Messsignale abgenommen und an eine Folgeelektronik weitergeleitet. Hierzu ist bei bekannten Winkelmesseinrichtungen am Gehäuse der Winkelmesseinrichtung eine Öffnung vorgesehen, durch die hindurch das Anschlusskabel der Winkelmesseinrichtung zugeführt und dort mit einer geeigneten elektrischen Anschlusseinheit kontaktiert werden kann.

Aus der EP 0 776 065 B1 ist eine Winkelmesseinrichtung mit einem topfförmigen, hohlzylindrischen Gehäuse bekannt, das in seiner Grundfläche eine Öffnung aufweist, durch die hindurch innerhalb des Gehäuses ein elektrischer Anschlussstecker für das Anschlusskabel, eine Vorrichtung zur Zugentlastung des Kabels sowie ein Verbindungsmittel, über das eine Welle der Winkelmesseinrichtung mit einem zu messenden Körper verbunden werden kann, zugänglich sind. Diese Öffnung ist mittels eines Deckels abdeckbar, der klappbar mit dem Gehäuse verbunden ist und zum Abdecken der Öffnung hinter einen Vorsprung des Gehäuses schnappbar ist. Hierbei wird die Schnappverbindung zwischen dem Deckel und dem Gehäuse besonders beansprucht, wenn die Winkelmesseinrichtung Vibrationen ausgesetzt ist oder auf das Anschlusskabel starke Zugbelastungen wirken.

Aus dem Firmenprospekt "Positionsmeßsysteme für elektrische Antriebe" der Dr. Johannes Heidenhain GmbH (Ausgabe Juli 1997), Seite 54 ist ein Drehgeber mit angebauter Statorkupplung zum Einbau in Motoren bekannt, bei dem es sich um eine Winkelmesseinrichtung der vorstehend genannten Art handelt. Diese weist in einer kreisförmigen Rückwand ihres Gehäuses eine großflächige Ausnehmung auf, durch die hindurch sowohl ein Verbindungsmittel zur Befestigung einer Welle der Winkelmesseinrichtung an einem zu messenden Körper als auch eine elektrische Anschlusseinheit der Winkelmesseinrichtung zugänglich sind. Die Öffnung ist mit einem Deckel abdeckbar, der mittels einer im Bereich des äußeren Randes der Rückwand angeordneten Befestigungsschraube an der Rückwand des Gehäuses fixiert wird. Hierbei ist die Schraubverbindung in der Rückwand des Gehäuses entsprechenden Belastungen ausgesetzt, wenn Vibrationen auf die Winkelmesseinrichtung wirken.

Die DE 297 18 245 U1 zeigt eine Winkelmesseinrichtung, bei der ein Gehäusedeckel mittels mehrerer Schrauben an einem Gehäusezwischenboden der Winkelmesseinrichtung abnehmbar befestigt ist.

Die WO 99/54683 A2 offenbart eine Winkelmesseinrichtung, bei der hinter einer zentral angeordneten Öffnung der Gehäusewand ein Verbindungsmittel angeordnet ist, das zur Verbindung einer Welle der Winkelmesseinrichtung mit einem zu messenden Körper dient, wobei durch diese Öffnung hindurch das Verbindungsmittel betätigbar ist. Diese Öffnung ist mit einer Abdeckschraube verschließbar.

In der früheren - nicht vorveröffentlichten - deutschen Patentanmeldung 199 13 262 ist eine Winkelmesseinrichtung mit einem topfförmigen, hohlzylindrischen Gehäuse beschrieben, das in seiner die Grundfläche des Gehäuses bildenden Rückwand eine erste, zentrale Öffnung aufweist, durch die hindurch ein Verbindungsmittel betätigt werden kann, das zur Verbindung einer Welle der Winkelmesseinrichtung mit einem zu messenden Körper dient. Diese Öffnung wird durch einen Halter verschlossen, der zugleich zur Befestigung eines Anschlusskabels am Gehäuse dient. Das Anschlusskabel wird dem Inneren des Gehäuses durch eine weitere, außermittige Öffnung in der Rückwand des Gehäuses hindurch zugeführt, die mit einem Deckel verschlossen wird, der zwischen dem Gehäuse und dem Halter arretiert ist und den Halter in seiner Position fixiert.

Der Erfindung liegt die Aufgabe zugrunde, eine Winkelmesseinrichtung der eingangs genannten Art zu schaffen, die mit einfachen Mitteln eine zuverlässige und dauerhafte Befestigung des Deckels am Gehäuse der Winkelmesseinrichtung ermöglicht.

Diese Aufgabe wird erfindungsgemäß durch die Schaffung einer Winkelmesseinrichtung mit den Merkmalen des Patentanspruchs 1 gelöst.

Danach ist an der kreisförmigen Gehäusewand eine Befestigungsstelle vorgesehen, die zentrisch bezüglich der Gehäusewand angeordnet ist und auf die zur Fixierung des Deckels bezüglich der Gehäusewand ein Befestigungselement drehbar ist. Versuche haben gezeigt, dass durch die zentrische Anordnung der Befestigungsstelle eine besonders vibrationsfeste Fixierung des Deckels an der kreisförmigen Gehäusewand erreicht wird.

Die erfindungsgemäße Lösung ist auch dann vorteilhaft anwendbar, wenn in der Gehäusewand eine exzentrisch bezüglich des Mittelpunktes ausgebildete oder außerhalb des Mittelpunktes angeordnete Öffnung vorgesehen ist, die durch den Deckel abgedeckt werden soll. In diesem Fall wird die außermittig bezüglich des Mittelpunktes der Gehäusewand angeordnete bzw. exzentrisch bezüglich des Mittelpunktes ausgebildete Öffnung durch einen Deckel abgedeckt, der mittels eines zentrisch auf der Gehäusewand angeordneten Befestigungselementes an der Gehäusewand fixiert ist.

Hinter der mindestens einen Öffnung in der Gehäusewand kann ein elektrischer Anschluss der Winkelmesseinrichtung angeordnet sein, der durch die Öffnung hindurch von außerhalb des Gehäuses zugänglich ist, so dass der Anschluss mit einem entsprechenden Gegenanschluss eines (teilweise außerhalb des Gehäuses verlaufenden) Anschlusskabels kontaktierbar ist.

Ferner ist hinter einer Öffnung in der Gehäusewand ein Verbindungsmittel angeordnet, das zur Verbindung einer eine Codescheibe tragenden Welle der Winkelmesseinrichtung mit einem zu messenden Körper dient, wobei die Öffnung zum Betätigen des Verbindungsmittels von außerhalb des Gehäuses vorgesehen ist.

Nach einer Ausführungsform der Erfindung sind dem elektrischen Anschluss einerseits und dem Verbindungsmittel andererseits jeweils separate Öffnungen in der Gehäusewand zugeordnet, die beide durch denselben Deckel verschlossen werden. In diesem Fall ist die dem elektrischen Anschluss zugeordnete Öffnung vorzugsweise außerhalb des Mittelpunktes der Gehäusewand angeordnet, während die dem Verbindungsmittel zugeordnete Öffnung zentrisch in der Gehäusewand angeordnet ist.

Nach einer anderen Ausführungsform der Erfindung ist dem elektrischen Anschluss einerseits und dem Verbindungsmittel andererseits eine gemeinsame Öffnung in der Gehäusewand zugeordnet, die durch den Deckel verschlossen wird.

Wenn dem Verbindungsmittel eine zentrisch in der Gehäusewand angeordnete, kreisförmige Öffnung zugeordnet ist, dann kann diese zugleich als Befestigungsstelle dienen, über die der Deckel an der Gehäusewand fixiert wird. Hierzu kann konzentrisch zu der kreisförmigen Öffnung ein hohlzylindrischer Abschnitt aus der Gehäusewand herausgeformt sein, der die Befestigungsstelle bildet. Dieser Abschnitt kann beispielsweise mit einem Innen- oder einem Außengewinde versehen sein.

Eine derartige Doppelfunktion einer zentrischen, kreisförmigen Öffnung in der Gehäusewand (nämlich einerseits einen Zugang zu einem Verbindungsmittel zu bilden und andererseits als Befestigungsstelle zu dienen), ist auch dann möglich, wenn es sich bei der zentrisch angeordneten Öffnung nicht um eine separate Öffnung handelt, sondern wenn sich an diese unmittelbar eine weitere, außermittig angeordnete Öffnung anschließt, die z.B. den Zugang zu einem elektrischen Anschluss der Winkelmesseinrichtung ermöglichen soll. In diesem Fall bilden die zentrisch angeordnete, kreisförmige Öffnung und die weitere Öffnung (die außerhalb des Mittelpunktes der Gehäusewand angeordnet ist) jeweils einen Abschnitt einer gemeinsamen exzentrisch bezüglich des Mittelpunktes der Gehäusewand ausgebildeten Öffnung. Hierbei ist von Bedeutung, dass der zentrische, kreisförmige Abschnitt der Öffnung über einen Winkel von mehr als 180° mit dem Gewinde oder Verschlusselementen eines Bajonettverschlusses versehen ist, so dass das zugeordnete Befestigungselement in diesen Abschnitt der Öffnung eingedreht werden kann.

Wie bei den bekannten Winkelmesseinrichtungen ist es auch bei der erfindungsgemäßen Winkelmesseinrichtung ohne weiteres möglich, eine Vorrichtung zur Zugentlastung eines Anschlusskabels vorzusehen, die durch den Deckel abgedeckt wird und die bei abgenommenem Deckel zugänglich ist.

Gemäß einer Ausführungsform umfasst die Vorrichtung zur Zugentlastung eine Aufnahme in der Gehäusewand, in der ein Abschnitt des Anschlusskabels einklemmbar ist.

Nach einer anderen Ausführungsform ist eine Ausnehmung in der Gehäusewand vorgesehen, in die ein Abschnitt des Anschlusskabels formschlüssig eingreifen kann.

Darüber hinaus kann in dem Deckel selbst auf seiner der Gehäusewand zugewandten Seite eine Ausformung zur Aufnahme eines Abschnittes des Anschlusskabels vorgesehen sein.

Der Abschnitt des Anschlusskabels, der von der Vorrichtung zur Zugentlastung aufgenommen wird, besteht vorzugsweise aus einer elektrisch leitfähigen Hülse, insbesondere einer Crimphülse, die eine elektrisch leitende Verbindung zwischen dem Schirm des Anschlusskabels und der vorzugsweise aus einem elektrisch leitfähigen Material bestehenden Gehäusewand herstellt.

Zur Fixierung des Deckels an der Gehäusewand kann ein separates, von dem Deckel getrenntes Befestigungselement, insbesondere in Form einer Schraube, vorgesehen sein. Dieses wird vorzugsweise verliersicher an dem Deckel gehalten, und zwar derart, dass es drehbar in einer entsprechenden Öffnung des Deckels gehalten wird, z.B. mittels eines Halteringes, der ein axiales Abrutschen des Befestigungselementes von dem Deckel verhindert.

Anstelle einer Schraubverbindung kann aber auch eine Fixierung des Deckels an der Gehäusewand nach Art eines Bajonettverschlusses vorgesehen sein, wobei - wie bei der Schraubverbindung - das Befestigungselement auf die entsprechende Befestigungsstelle an der Gehäusewand gedreht wird, um eine Verbindung zwischen dem Befestigungselement und der Befestigungsstelle (nach Art eines Bajonettverschlusses) herzustellen.

Weitere Merkmale und Vorteile der Erfindung werden bei der nachfolgenden Beschreibung eines Ausführungsbeispiels anhand der Figuren deutlich werden.

Es zeigen:
- Figur1: eine Winkelmesseinrichtung im Querschnitt längs einer Wellenachse der Winkelmesseinrichtung;
- Figur 2: eine Draufsicht auf die Winkelmesseinrichtung gemäß Figur 1 bei abgenommener Abdeckung;
- Figur 3: eine Querschnittsdarstellung des Gehäuses der Winkelmesseinrichtung aus den Figuren 1 und 2;
- Figur 4: eine Draufsicht auf das Gehäuse aus Figur 3;
- Figur 5: eine zweite Ausführungsform eines Gehäuses für eine Winkelmesseinrichtung im Querschnitt;
- Figur 6: eine Draufsicht auf das Gehäuse aus Figur 5.

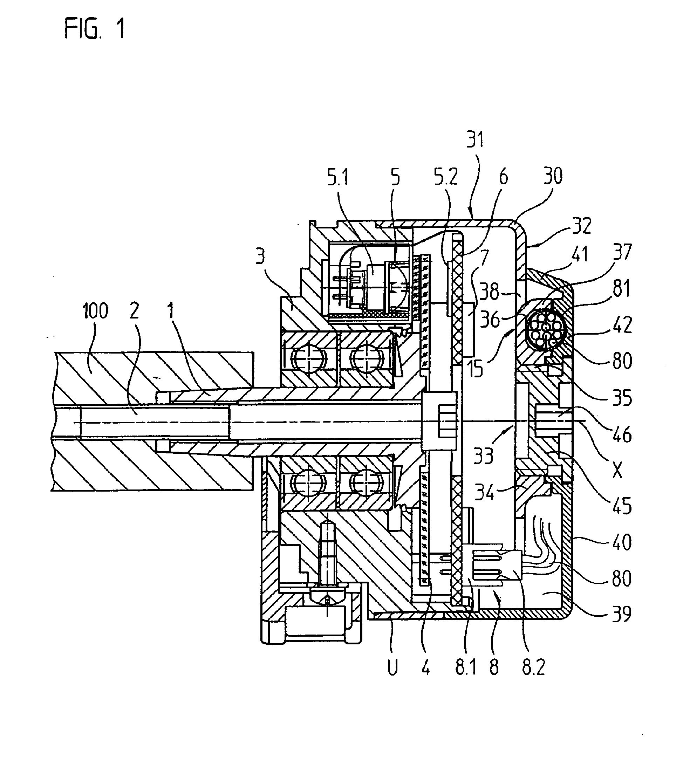

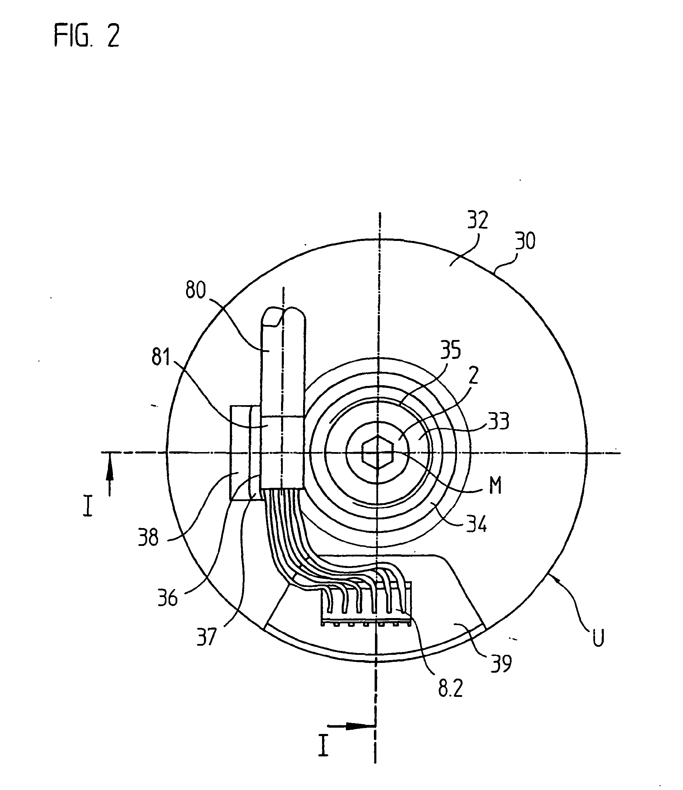

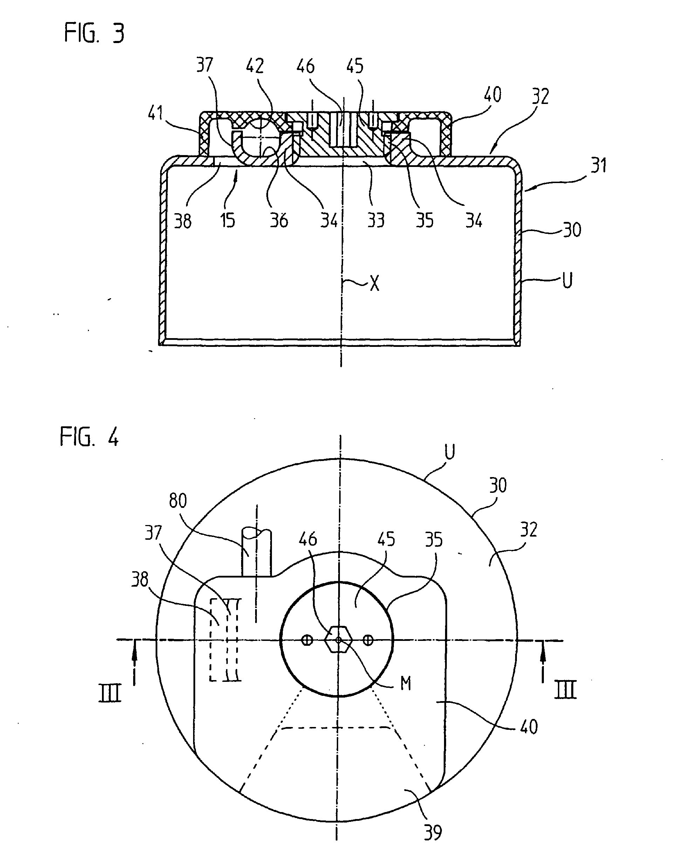

Im Folgenden wird zunächst anhand der Figuren 1 und 2 der Aufbau einer Winkelmesseinrichtung beschrieben, mit der die Drehbewegung eines rotierenden Körpers erfassbar ist. Im Anschluss daran werden anhand der Figuren 3, 4 und 5, 6 zwei Ausführungsbeispiele eines Gehäuses für eine derartige Winkelmesseinrichtung erläutert, deren Rückwand mehrere Öffnungen aufweist, die durch einen zentrisch an der Rückwand befestigten Deckel abdeckbar sind.

Die in den Figuren 1 und 2 dargestellte Winkelmesseinrichtung weist eine Welle 1 zum Anschluss an einen zu messenden Körper 100 auf. Die Verbindung zwischen der Welle 1 und dem zu messenden Körper 100 wird beispielsweise mit einem durch die Welle 1 ragenden Verbindungsmittel in Form einer Schraube 2 realisiert.

Die Winkelmesseinrichtung selbst wird über einen Grundkörper 3 an einem weiteren Körper befestigt. Der zu messende Körper 100 ist beispielsweise eine Motorwelle und der weitere Körper das stationäre Motorgehäuse.

In bekannter Weise ist die Welle 1 im Grundkörper 3 drehbar gelagert, wobei an der Welle 1 eine Codescheibe 4 befestigt ist und/oder die Welle 1 über ein Getriebe eine oder mehrere Codescheiben antreibt. Die Codescheibe 4 wird im gezeigten Beispiel lichtelektrisch von einer Abtasteinrichtung 5 abgetastet. Da die Codescheibe 4 im Durchlichtverfahren abgetastet wird, ist hierzu eine Lichtquelle 5.1 im Grundkörper 3 auf einer Seite der Codescheibe 4 und ein Detektor 5.2 auf der anderen Seite der Codescheibe 4 angeordnet. Der Detektor 5.2 befindet sich auf einer Leiterplatte 6, und zwar auf der Seite, die der Codescheibe 4 zugewandt ist. Auf der anderen Seite der Leiterplatte 6 sind elektrische Bauelemente 7 zur Signalformung - beispielsweise Verstärkung und Digitalisierung - der vom Detektor 5.2 gelieferten Abtastsignale angeordnet. Auf der Leiterplatte 6 befindet sich weiterhin ein Teil 8.1 (elektrischer Anschluss) einer Steckverbindung 8. Das korrespondierende Teile 8.2 (Gegenanschluss) dieser Steckverbindung 8 ist an einem nach außen führenden Anschlusskabel 80 befestigt.

Zum Schutz der Winkelmesseinrichtung ist ein topfförmiges Gehäuse 30 vorgesehen, welches über den Umfang klemmend am Grundkörper 3 befestigt ist. Im dargestellten Beispiel ist diese Verbindung eine Pressverbindung.

Das Gehäuse 30 weist in seinem Innenraum eine Vorrichtung 15 zur Zugentlastung des Anschlusskabels 80 auf. Diese Vorrichtung 15 ist integraler Bestandteil des Gehäuses 30 und umfasst eine Aufnahme 36 des Gehäuses 30, in die ein mit dem Anschlusskabel 80 fest verbundenes Teil 81 eingreift, wodurch ein Formschluss zwischen dem Gehäuse 30 und dem Anschlusskabel 80 bzw. dem Teil 81 entsteht. Eine am Anschlusskabel 80 außerhalb der Winkelmesseinrichtung angreifende Zugkraft wird dadurch nicht auf die Steckverbindung 8 übertragen.

Das am Anschlusskabel 80 befestigte Teil 81 ist vorzugsweise eine Crimphülse, die über ihre gesamte Länge (oder alternativ mit einer Verdickung) in der Aufnahme 36 des Gehäuses 30 liegt. Diese Crimphülse 81 ist elektrisch leitend und ist zur sicheren und einfachen Befestigung in der Aufnahme 36 des Gehäuses 30 geklemmt. Diese Aufnahme 36 ist an die Form der Hülse 81 angepasst und umgreift diese nach dem Einschnappen teilweise. Die Crimphülse 81 stellt somit eine elektrische Verbindung zwischen dem Schirm des Anschlusskabels 80 und dem Gehäuse 30 her. Das Gehäuse 30 ist dadurch mittels des Anschlusskabels 80 auf einfache Weise mit dem Bezugspotential einer Folgeelektronik (Zähler, Steuerung) verbindbar. Das Gehäuse 30 ist beispielsweise aus einem elektrisch leitenden Kunststoff oder aus einem elektrisch leitend beschichteten Kunststoff hergestellt - insbesondere ein Spritzgussteil. Die Aufnahme 36 ist derart im Gehäuse 30 angeordnet, dass das Anschlusskabel 80 im Bereich der Aufnahme 36 zumindest annähernd senkrecht zur Längsachse X der Winkelmesseinrichtung verläuft.

Zum einfachen Anschluss und Auswechseln des Anschlusskabels 80 ist an einem axialen Ende des Gehäuses 30 eine verschließbare Öffnung 39 vorgesehen. Diese Öffnung 39 ist mit einem Deckel 40 verschließbar, der weiter unten anhand der Figuren 3 und 4 näher erläutert wird. Mittels des Deckels 40 ist die Winkelmesseinrichtung allseitig zumindest staubdicht verschließbar und gegen elektromagnetische Felder abschirmbar. Bei abgenommenem Deckel 40 können der Hersteller der Winkelmesseinrichtung sowie der Anwender das Anschlusskabel 80 an ein Teil 8.1 der Steckverbindung 8 anschließen und das Anschlusskabel 80 in die Vorrichtung 15 zur Zugentlastung einlegen. Das Gehäuse 30 ist so ausgebildet, dass ausschließlich das Steckverbindungsteil 8.1 über die Gehäuseöffnung 39 bei geöffnetem Deckel 40 von außen zugänglich ist. Die weiteren Bauelemente 7 auf der Leiterplatte 6 sowie die Leiterplatte 6 selbst sind auch im geöffneten Zustand des Deckels 40 vom Gehäuse 30 abgedeckt.

Um eine einfache Montage der Welle 1 der Winkelmesseinrichtung an eine zu messende Welle 100 zu gewährleisten, ist die Schraube 2 bei geöffnetem Deckel 40 ebenfalls zugänglich.

Die Vorrichtung 15 zur Zugentlastung ist vollständig innerhalb der radialen Außenkontur des Gehäuses 30 mit Abstand zur radialen Außenkontur des Grundkörpers 3 und Gehäuses 30 angeordnet. Dies hat den Vorteil, dass das Anschlusskabel 80 innerhalb eines Bereiches der Winkelmesseinrichtung selbst von der Vorrichtung 15 bis zur Außenkontur beliebig gebogen werden kann. Dadurch kann ein beliebig radialer oder auch axialer Kabelausgang gewählt werden. Die Fixierung des Anschlusskabels 80 für die Zugentlastung muss von der Außenkontur des Gehäuses 30 zumindest entsprechend dem minimal zulässigen bzw. möglichen Biegeradius des Anschlusskabels 80 beabstandet sein.

In den Figuren 3 und 4 ist das Gehäuse 30 der Winkelmesseinrichtung aus den Figuren 1 und 2 separat dargestellt. Auf diese Figuren wird nachfolgend zusätzlich zu den Figuren 1 und 2 Bezug genommen..

Das Gehäuse 30 ist topfförmig ausgebildet und weist eine einen Hohlzylinder definierende Seitenwand 31 sowie eine die Grundfläche des Hohlzylinders definierende Rückwand 32 auf. In der Rückwand 32 des Gehäuses 30 sind mehrere Öffnungen 33, 38, 39 vorgesehen, deren Ausgestaltung und Funktion nachfolgend näher erläutert wird.

Eine Öffnung 39 ist außermittig in der Rückwand 32 vorgesehen und erstreckt sich nach außen bis zum Umfang U der Rückwand 32. Diese Öffnung 39 ist vollständig außerhalb des Mittelpunktes M der Rückwand 32 angeordnet, d.h. der Rand der Öffnung 39 umschließt nicht den Mittelpunkt M.

Mittels der außermittig angeordneten Öffnung 39 wird ein Zugang zu einem elektrischen Anschluss der Winkelmesseinrichtung (in Form eines Teils 8.1 der Steckverbindung 8) geschaffen, der hinter der Öffnung 39 in dem Gehäuse 30 angeordnet ist. Durch die Öffnung 39 kann demnach ein mit einem Steckverbinder 8.2 versehenes Ende des Anschlusskabels 80 in das Gehäuse 30 eingeführt werden, um dort eine elektrische Verbindung mit einem elektrischen Anschluss 8.1 der Winkelmesseinrichtung herzustellen.

Eine weitere außermittige Öffnung 38 in der Rückwand 32 des Gehäuses 30 ist dadurch gebildet, dass in der Rückwand 32 ein Steg 37 aufgebördelt worden ist. Dieser Steg 37 befindet sich neben einem Durchzug 34, der zentrisch aus der Rückwand 32 herausgeformt ist. Der Durchzug 34 ist als ein senkrecht von der Rückwand 32 abstehender hohlzylindrischer Abschnitt ausgebildet, dessen Mittelachse mit der Längsachse X des Gehäuses 30 zusammenfällt. Dies bedeutet, dass die durch den Durchzug 34 gebildete Öffnung 33 in der Rückwand 32 konzentrisch zu dem Umfang U der Rückwand angeordnet ist.

Die zentrisch in der Rückwand 32 des Gehäuses 30 liegende Öffnung 33 ermöglicht die Betätigung eines Verbindungsmittels 2, über das eine mit einer Codescheibe 4 versehene Welle 1 der Winkelmesseinrichtung mit einem zu messenden, rotierenden Körper 100 verbunden wird (vergleiche Figur 1).

Zwischen dem äußeren Umfang des Durchzuges 34 und dem Steg 37 ist die Aufnahme 36 ausgebildet, in der ein Abschnitt des Anschlusskabels 80 der Winkelmesseinrichtung eingeklemmt werden kann, so dass eine außerhalb des Gehäuses 30 auf das Kabel 80 wirkende Kraft nicht auf die elektrische Steckverbindung 8 innerhalb des Gehäuses 30 übertragen wird. Diese Aufnahme 36 bildet also einen Teil der Vorrichtung 15 zur Zugentlastung des Kabels 80.

Das Anschlusskabel 80 wird in der Aufnahme 36 vorzugsweise an einem Kabelabschnitt aufgenommen, der die Hülse 81 aus einem elektrisch leitfähigen Material, insbesondere eine Crimphülse aufweist, die mit dem Schirm des Anschlusskabels 80 verbunden ist. Hierdurch wird in der Aufnahme 36 zugleich der Schirm des Anschlusskabels 80 elektrisch leitend mit dem Gehäuse 30 verbunden, das vorzugsweise aus einem elektrisch leitfähigen Material besteht.

Es ist auch möglich, eine Vorrichtung zur Zugentlastung - also die Mittel zur Fixierung des Anschlusskabels 80 am Gehäuse 30 - hinter der von außen zugänglichen und verschließbaren Gehäuseöffnung 39 anzuordnen, die auch dem Zugriff auf die elektrische Steckverbindung 8 innerhalb des Gehäuses 30 dient. Hierzu muss die Gehäuseöffnung 39 entsprechend ausgestaltet werden.

Die Öffnungen 33, 38, 39 in der Rückwand 32 des Gehäuses 30 werden mittels des Deckels 40 verschlossen, um die Winkelmesseinrichtung vor Staub zu schützen und gegen elektromagnetische Felder anzuschirmen. Um eine dichte Verbindung zwischen dem Deckel 40 und der Rückwand 32 des Gehäuses 30 zu schaffen, erstrecken sich die seitlichen Ränder 41 des Deckels 40 bis auf die Oberfläche der Rückwand 32 bzw. bis zur Seitenwand 31 des Gehäuses 30.

Die Fixierung des Deckels 40 an der Rückwand 32 des Gehäuses 30 erfolgt mittels einer Befestigungs- und Verschlussschraube 45, die die zentrale Öffnung 33 des Deckels 40 durchgreift und die in eine Innengewinde 35 des Durchzugs 34 einschraubbar ist. Der zum Betätigen der Befestigungsschraube 45 vorgesehene Betätigungsabschnitt 46 ist dabei vorzugsweise mit demselben Werkzeug betätigbar wie das hinter der Öffnung 33 liegende Verbindungsmittel 2.

Insbesondere anhand der Figur 4 ist erkennbar, dass der Deckel 40 einerseits exzentrisch bezüglich des (auf der Längsachse X der Winkelmesseinrichtung liegenden) Mittelpunktes M der Rückwand 32 ausgebildet ist, um die außermittig angeordneten Öffnungen 38, 39 in der Rückwand 32 abzudecken, und dass andererseits der Deckel 40 mittels der Schraube 45 zentrisch auf der Rückwand 32 befestigt ist. Es hat sich gezeigt, dass die zentrische Befestigung des Deckels 40 an der Rückwand 32 zu einer vibrationsfesten Fixierung des Deckels 40 führt. Die Vibrationsfestigkeit der Verbindung zwischen Deckel 40 und Gehäuse 30 wird dabei noch dadurch gefördert, dass die Befestigungsschraube 45 großflächig an dem Innengewinde 35 anliegt. Dies ist die Folge einer entsprechend großflächigen Ausbildung der zentrisch angeordneten Öffnung 33 in der Rückwand 32, so dass das Innengewinde 35 länger ausgeführt werden kann als die Dicke der Rückwand 32 selbst..

Zur räumlichen Fixierung des Deckels 40 auf der Rückwand 32 vor dem Eindrehen der Befestigungsschraube 45 in das Innengewinde 35 des Durchzugs 34 dient eine Ausformung 42 in der der Rückwand 32 zugewandten Seite des Deckels 40, die einen Teil der in der Aufnahme 36 eingeklemmten Hülse des Kabels 80 umschließt.

Eine bevorzugte Weiterbildung des Ausführungsbeispiels aus den Figuren 3 und 4 besteht darin, dass die Befestigungsschraube 45 verliersicher an dem Deckel 40 gehalten wird. Hierzu kann beispielsweise ein an dem Deckel 40 befestigter Haltering vorgesehen sein, der die Befestigungsschraube 45 drehbar, aber relativ zum Deckel 40 axial nicht längsverschiebbar aufnimmt.

Die Fixierung des Deckels 40 auf der Rückwand 32 durch Eindrehen eines Befestigungselementes 45 in eine zugeordnete Befestigungsstelle 34 muss nicht über eine Schraubverbindung erfolgen. Statt dessen kann beispielsweise eine Verbindung nach Art eines Bajonettverschlusses vorgesehen sein.

Schließlich ist es nicht zwingend erforderlich, dass die Öffnungen 33, 38, 39 in der Rückwand 32 des Gehäuses 30 jeweils als separate Öffnungen ausgebildet sind. So können zwei dieser Öffnungen oder auch alle drei Öffnungen zu einer größeren Öffnung zusammengefasst sein. In Figur 4 ist durch eine gepunktete Linie die Zusammenfassung der zentrischen Öffnung 33 mit einer der außermittigen Öffnungen (Öffnung 39) zu einer exzentrisch bezüglich des Mittelpunktes M der Rückwand 32 ausgebildeten Öffnung angedeutet.

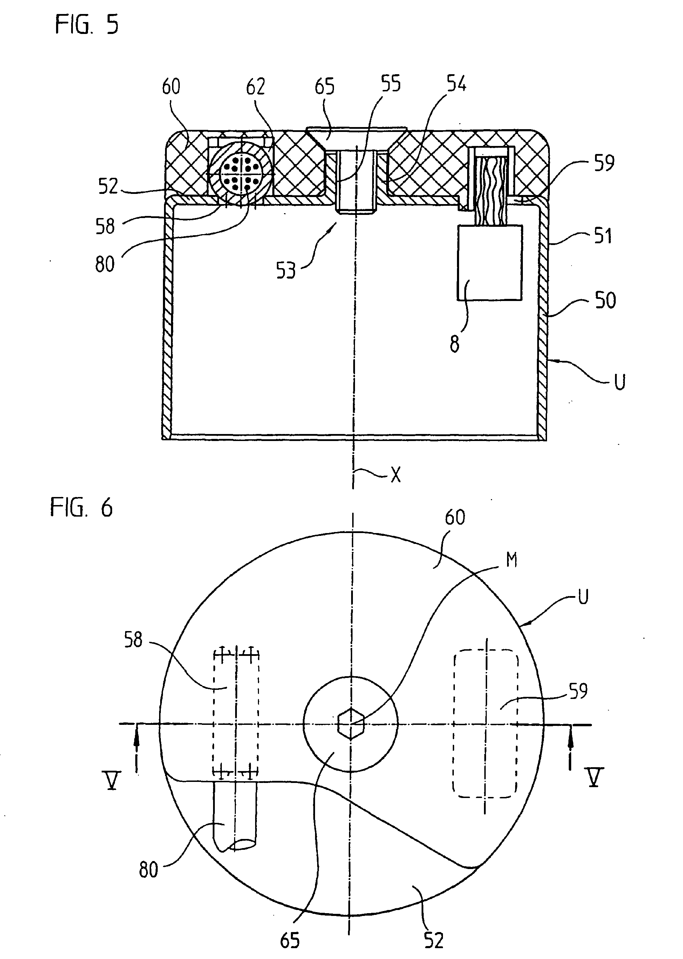

In den Figuren 5 und 6 ist eine Abwandlung des Ausführungsbeispiels aus den Figuren 1 bis 4 dargestellt. Auch gemäß den Figuren 5 und 6 ist das Gehäuse 50 der Winkelmesseinrichtung topfförmig ausgebildet mit einer hohlzylindrischen Seitenwand 51 und einer kreisförmigen Rückwand 52. Eine zentrische Öffnung 53 in der Rückwand 52 ist gebildet durch einen Durchzug 54, der als hohlzylindrischer Abschnitt von der Rückwand 52 absteht und mit einem Innengewinde 55 versehen ist.

Die zentrale Öffnung 53 übernimmt wie bei dem vorhergehenden Ausführungsbeispiel eine Doppelfunktion. Einerseits dient sie als Zugang zu einem Verbindungsmittel, über das eine mit einer Codescheibe versehene Welle der Winkelmesseinrichtung mit dem zu messenden Körper verbindbar ist (identisch mit Ausführung gemäß Figur 1, daher hier nicht dargestellt); andererseits bildet sie eine Befestigungsstelle 54, über die ein Deckel 60 an dem Gehäuse 50 fixierbar ist.

Außermittig bezüglich des Mittelpunktes M der Rückwand 52 ist eine Öffnung 59 angeordnet, durch die hindurch ein Anschlusskabel 80 mit seinem mit einem Teil 8.2 des Steckverbinders 8 versehenen Ende in das Gehäuse 50 einführbar ist, um dort einen elektrischen Kontakt mit einem innerhalb des Gehäuses 50 angeordneten elektrischen Anschluss 8.1 der Winkelmesseinrichtung in Form eines Steckverbinders 8 herzustellen.

Eine weitere außermittig angeordnete Öffnung 58 in der Rückwand 52 dient der Bildung einer Vorrichtung zur Zugentlastung. Diese Öffnung 58 wird durch eine Ausklinkung in der Rückwand 52 gebildet und ist derart dimensioniert, dass sie eine elektrisch leitende Hülse 81 des Anschlusskabels 80 (insbesondere eine Crimphülse) formschlüssig aufnehmen kann. Durch die formschlüssige Aufnahme des Anschlusskabels 80 im Bereich der elektrisch leitenden Hülse 81 in der Öffnung 58 wird verhindert, dass auf das Kabel 80 wirkende Kräfte auf den Steckverbinder 8 übertragen werden. Das Anschlusskabel 80 ist dabei von der zur Aufnahme der Hülse 81 dienenden Öffnung 58 zu der gegenüberliegenden, als Durchgang für das Steckerteil 8.2 dienenden Öffnung 59 geführt.

Die Befestigung des Deckels 60 auf dem Gehäuse 50 erfolgt wie bei dem vorhergehenden Ausführungsbeispiel mittels einer Befestigungs- bzw. Verschlussschraube 65, die die Öffnung 53 in dem Deckel 60 durchgreift und in den mit dem Innengewinde 55 versehenen Durchzug 54 eingeschraubt ist.

Wie auch bei dem vorhergehenden Ausführungsbeispiel ist der Deckel 60 exzentrisch bezüglich des Mittelpunktes M der Rückwand 52 ausgebildet und bedeckt nur einen Teil der Rückwand 52 des Gehäuses 50, so dass das Kabel 80 auf der Rückwand 52 aus dem Deckel 60 herausgeführt werden kann. Dabei werden aber durch den Deckel 60 sämtliche Öffnungen 53, 58, 59 in der Rückwand 52 des Gehäuses 50 verschlossen.

Im Unterschied zum vorhergehenden Ausführungsbeispiel ist vorliegend die Ausformung 62 in dem Deckel 60, die einen Teil der elektrisch leitenden Hülse 81 des Kabels 80 aufnimmt, als eine Kammer ausgebildet, die die Hülse 81 derart radial und axial umgreift, dass die Hülse 81 innerhalb dieser Kammer gegen axiale Bewegungen, also entlang der Erstreckungsrichtung des Anschlusskabels 80 gesichert ist. Demzufolge ist die Kammer unmittelbarer Bestandteil der Vorrichtung zur Zugentlastung.

## Patentansprüche

1. Winkelmesseinrichtung mit
- einem Gehäuse (30, 50), das in einer Gehäusewand (32, 52), die eine endseitige Grundfläche des Gehäuses (30, 50) mit einem Zentrum (M) bildet, mindestens eine Öffnung (33, 38, 39, 53, 58, 59) aufweist;
- einem Deckel (40, 60) zum Verschließen der mindestens einen Öffnung (33, 38, 39, 53, 58, 59);
- einem hinter einer der zumindest einen Öffnung (33, 53) in der Gehäusewand (32, 52) angeordneten Verbindungsmittel (2), das zur Verbindung einer Welle (1) der Winkelmesseinrichtung mit einem zu messenden Körper (100) dient, wobei durch diese Öffnung (33, 53) hindurch das Verbindungsmittel (2) betätigbar ist, und
- mindestens einer an der Gehäusewand (32, 52) vorgesehenen Befestigungsstelle (33, 34, 35; 53, 54, 55) zum Fixieren des Deckels (40, 60) bezüglich der Gehäusewand (32, 52), **dadurch gekennzeichnet, dass**
- an der Gehäusewand (32, 52) ein das Zentrum (M) einschließender Befestigungsbereich (33, 34, 35; 53, 54, 55) vorgesehen ist, auf den zur Fixierung des Deckels (40, 60) bezüglich der Gehäusewand (32, 52) ein Befestigungselement (45, 65) relativ zum Gehäuse (30, 50) und des Deckels (40, 60) drehbar ist, wobei die Öffnung (33, 53), durch die hindurch das Verbindungsmittel (2) betätigbar ist, durch das Befestigungselement (45, 65) abdeckbar ist.

2. Winkelmesseinrichtung nach Anspruch 1, **dadurch gekennzeichnet, dass** die Öffnung (33, 53) kreisförmig ist, und dass konzentrisch zu der kreisförmigen Öffnung (33, 53) ein hohlzylindrischer Abschnitt (34, 54) aus der Gehäusewand (32, 52) herausgeformt ist, der die Befestigungsstelle bildet, indem ein Innen- oder ein Außengewinde (35, 55) daran ausgeformt ist.

3. Winkelmesseinrichtung nach Anspruch 2, **dadurch gekennzeichnet, dass** das Befestigungselement eine Schraube (45, 65) ist, mit der der Deckel (40, 60) an der Gehäusewand (32, 52) fixierbar ist, indem die Schraube (45, 65) mit dem Innen- oder Außengewinde (35, 55) des hohlzylindrischen Abschnitts (34, 54) zusammenwirkt.

4. Winkelmesseinrichtung nach einem der Ansprüche 1 bis 3, **dadurch gekennzeichnet, dass** das Befestigungselement (45, 65) und das Verbindungsmittel (2) mit demselben Werkzeug betätigbar sind.

5. Winkelmesseinrichtung nach einem der vorhergehenden Ansprüche, **dadurch gekennzeichnet, dass** hinter einer Öffnung (39, 59) in der Gehäusewand (32, 52) eine elektrische Steckverbindung (8.1) der Winkelmesseinrichtung angeordnet ist, die durch die Öffnung (39, 59) hindurch von außerhalb des Gehäuses (30, 50) zugänglich ist und ein Anschlusskabel (80) daran ansteckbar ist.

6. Winkelmesseinrichtung nach Anspruch 5, **dadurch gekennzeichnet, dass** dem elektrischen Steckverbinder (8.1) und dem Verbindungsmittel (2) jeweils eine separate Öffnung (39, 33; 59, 53) in der Gehäusewand (32, 52) zugeordnet ist und dass beide Öffnungen (39, 33; 59, 53) durch den Deckel (40, 60) verschließbar sind.

7. Winkelmesseinrichtung nach Anspruch 5, **dadurch gekennzeichnet, dass** dem elektrischen Steckverbinder (8.1) und dem Verbindungsmittel (2) eine gemeinsame Öffnung (33, 39) in der Gehäusewand (32) zugeordnet ist, die durch den Deckel (40) verschließbar ist.

8. Winkelmesseinrichtung nach einem der vorhergehenden Ansprüche 5 bis 7, **dadurch gekennzeichnet, dass** eine Vorrichtung (15) zur Zugentlastung des Anschlusskabels (80) vorgesehen ist, die durch den Deckel (40, 60) abdeckbar ist und die bei abgenommenem Deckel (40, 60) zugänglich ist.

9. Winkelmesseinrichtung nach Anspruch 8, **dadurch gekennzeichnet, dass** die Vorrichtung (15) zur Zugentlastung eine Aufnahme (36, 58) in der Gehäusewand (32, 52) umfasst, in der ein Abschnitt (81) des Anschlusskabels (80) einklemmbar ist.

## Claims

1. An angle measuring device, comprising:
- a housing (30, 50) having at least one opening (33, 38, 39, 53, 58, 59) in a housing wall (32, 52) forming a base at the end of the housing (30, 50) with a centre (M);
- a lid (40, 60) for closing the at least one opening (33, 38, 39, 53, 58, 59);
- a connecting means (2) arranged behind the at least one opening (33, 53) in the housing wall (32, 52) for connecting a shaft (1) of the angle measuring device with a body (100) to be measured, whereby the connecting means (2) is actuable through this opening (33, 53), and
- at least one mounting point (33, 34, 35; 53, 54, 55) provided in the housing wall (32, 52) for fixing the lid (40, 80) with respect to the housing wall (32, 52),
**characterised in that**
- on the housing wall (32, 52), a mounting area (33, 34, 35; 53, 54, 55) including the centre (M) is provided, on which a mounting element (45, 65) for fixing the lid (40, 60) with respect to the housing wall (32, 52) is rotatable relative to the housing (30, 50) and the lid (40, 60), whereby the opening (33, 53), through which the connecting means (2) is actuable, may be covered by the mounting element (45, 65).

2. The angle measuring device according to claim 1, **characterised in that** the opening (33, 53) is circular and **in that** a hollow-cylindrical portion (34, 54) has been formed out of the housing wall (32, 52) concentrically to the circular opening (33, 53), which cylinder forms the mounting point in that it has a female or male thread (35, 55) formed on it.

3. The angle measuring device according to claim 2, **characterised in that** the mounting element is a screw (45, 65), with which the lid (40, 60) is fixable to the housing wall (32, 52), whereby the screw (45, 65) cooperates with the female or male thread (35, 55) of the hollow-cylindrical portion (34, 54).

4. The angle measuring device according to one of claims 1 to 3, **characterised in that** the mounting element (45, 65) and the connecting means (2) are actuable using the same tool.

5. The angle measuring device according to any of the preceding claims, **characterised in that** an electrical plug-in connection (8.1) for the angle measuring device has been arranged behind an opening (39, 59) in the housing wall (32, 52), which is accessible through the opening (39, 59) from outside the housing (30, 50) and into which a connecting cable (80) can be plugged.

6. The angle measuring device according to claim 5, **characterised in that** the electrical plug-in connector (8.1) and the connecting means (2) each have a separate opening (39, 33; 59, 53) in the housing wall (32, 52) allocated to them, and **in that** both openings (39, 33; 59, 53) are closable by means of the lid (40, 60).

7. The angle measuring device according to claim 5, **characterised in that** the electrical plug-in connector (8.1) and the connecting means (2) have a joint opening (33, 39) in the housing wall (32, 52) allocated to them, which is closable by means of the lid (40).

8. The angle measuring device according to one of the preceding claims 5 to 7, **characterised in that** an arrangement (15) for relieving tension in the connecting cable (80) is provided which can be covered by the lid (40, 60), and which is accessible when the lid (40, 60) is removed.

9. The angle measuring device according to claim 8, **characterised in that** the tension relieving arrangement (15) comprises a receptacle (36, 58) in the housing wall (32, 52), into which a portion (81) of the connecting cable (80) may be clamped.

## Revendications

1. Dispositif de mesure d'angle comportant :
- un boîtier (30, 50) qui comporte, dans une paroi de boîtier (32, 52) constituant une surface de base terminale du boîtier (30, 50) avec un centre (M), au moins une ouverture (33, 38, 39, 53, 58, 59) ;
- un couvercle (40, 60) pour fermer l'au moins une ouverture (33, 38, 39, 53, 58, 59) ;
- un moyen de raccordement (2) disposé derrière l'au moins une ouverture (33, 53) de la paroi du boîtier (32, 52) et servant à raccorder un arbre (1) du dispositif de mesure d'angle à un corps à mesurer (100), le moyen de raccordement (2) pouvant être actionné à travers cette ouverture (33, 53) et
- au moins un point de fixation (33, 34, 35 ; 53, 54, 55) prévu sur la paroi du boîtier (32, 52) pour fixer le couvercle (40, 60) par rapport à la paroi du boîtier (32, 52),
**caractérisé en ce que**
- il est prévu sur la paroi du boîtier (32, 52) une zone de fixation (33, 34, 35 ; 53, 54, 55) englobant le centre (M) sur laquelle, pour fixer le couvercle (40, 60) par rapport à la paroi du boîtier (32, 52), un élément de fixation (45, 65) peut tourner relativement au boîtier (30, 50) et au couvercle (40, 60), l'ouverture (33, 53) à travers laquelle le moyen de raccordement (2) peut être actionné pouvant être recouverte par l'élément de fixation (45, 65).

2. Dispositif de mesure d'angle selon la revendication 1, **caractérisé en ce que** l'ouverture (33, 53) est de forme circulaire et que, concentriquement à l'ouverture circulaire (33, 53), une section cylindrique creuse (34, 54) est réalisée dans la paroi du boîtier (32, 52), cette section constituant le point de fixation, du fait qu'un filetage intérieur ou extérieur (35, 55) est formé dessus.

3. Dispositif de mesure d'angle selon la revendication 2, **caractérisé en ce que** l'élément de fixation est une vis (45, 65) par laquelle le couvercle (40, 60) peut être fixé sur la paroi du boîtier (32, 52) du fait que la vis (45, 65) coopère avec le filetage intérieur ou extérieur (35, 55) de la section cylindrique creuse (34, 54).

4. Dispositif de mesure d'angle selon une des revendications 1 à 3, **caractérisé en ce que** l'élément de fixation (45, 65) et le moyen de raccordement (2) peuvent être actionnés avec le même outil.

5. Dispositif de mesure d'angle selon une des revendications précédentes, **caractérisé en ce que,** derrière une ouverture (39, 59) de la paroi du boîtier (32, 52), est disposée une prise électrique (8.1) du dispositif de mesure d'angle, cette prise étant accessible à travers l'ouverture (39, 59) depuis l'extérieur du boîtier (30, 50) et un câble de raccordement (80) pouvant être fiché dessus.

6. Dispositif de mesure d'angle selon la revendication 5, **caractérisé en ce qu'**à la prise électrique (8.1) et au moyen de raccordement (2) est associée respectivement une ouverture séparée (39, 33 ; 59, 53) de la paroi du boîtier (32, 52) et que les deux ouvertures (39, 33 ; 59, 53) peuvent être fermées par le couvercle (40, 60).

7. Dispositif de mesure d'angle selon la revendication 5, **caractérisé en ce qu'**à la prise électrique (8.1) et au moyen de raccordement (2) est associée une ouverture commune (33, 39) de la paroi du boîtier (32) qui peut être fermée par le couvercle (40).

8. Dispositif de mesure d'angle selon une des revendications précédentes 5 à 7, **caractérisé en ce qu'**il est prévu un dispositif (15) de délestage de traction du câble de raccordement (80), lequel dispositif peut être recouvert par le couvercle (40, 60) et est accessible lorsque le couvercle (40, 60) est enlevé.

9. Dispositif de mesure d'angle selon la revendication 8, **caractérisé en ce que** le dispositif (15) de délestage de traction comprend un support (36, 58) prévu dans la paroi du boîtier (32, 52) et dans lequel une section (81) du câble de raccordement (80) peut être serrée.
